# EUROPÄISCHE PATENTSCHRIFT

(11) **EP 4 238 410 B1**
(45) Veröffentlichungstag und Bekanntmachung des Hinweises auf die Patenterteilung: **01.07.2026**
(21) Anmeldenummer: 23159131.4
(22) Anmeldetag: 28.02.2023
(51) Int. Cl.: A01J 5/017

(54) **ROBOTER ZUM MELKEN VON KÜHEN**
A ROBOT FOR MILKING COWS
ROBOT DE TRAITE DE VACHES

(30) Priorität: 02.03.2022 CH 211202022
(43) Veröffentlichungstag der Anmeldung: 06.09.2023
(73) Patentinhaber: Sutter Landtechnik GmbH, 9204 Andwil (CH)
(72) Erfinder: SUTTER, Urs, 9212 Arnegg (CH); LANGENEGGER, Jonas, 8307 Effretikon (CH); URSPRUNG, Dominik, 8404 Winterthur (CH); REMPFLER, Mario, 9050 Appenzell (CH)
(74) Vertreter: Kaminski Harmann Patentanwälte AG (Schweiz)

(56) Entgegenhaltungen:
- US-A- 4 941 433
- US-B1- 6 213 051
- US-B2- 10 609 896

## Beschreibung

### GEBIET DER ERFINDUNG

Die vorliegende Erfindung betrifft einen Roboter zum Melken von Kühen.

### HINTERGRUND DER ERFINDUNG

Aus dem Stand der Technik sind Melkroboter bekannt, welche relativ aufwendige und massive Mechanismen aufweisen. Der Grund hierfür liegt darin, dass die benötigten Komponenten, vor allem eine Melkeinheit mitsamt Schläuchen für die abzutransportierende Milch, naturgemäss sehr schwer sind und exzentrisch zu den Zitzen einer Kuh gelangen müssen. Die dabei auftretenden Kräfte und Momente werden üblicherweise durch die besagten komplexen Konstruktionen kompensiert. Solche Melkroboter sind beispielsweise in den Offenbarungen US 4,941,433 A und US 6,213,051 B1 beschrieben.

### AUFGABE DER ERFINDUNG

Daher ist es eine Aufgabe der Erfindung, einen verbesserten Roboter zum Melken von Kühen bereitzustellen. Ein erfindungsgemässer Melkroboter zeichnet sich durch eine platzsparende Konstruktion aus und ermöglicht ein effizientes Anbringen einer Melkeinheit an den Zitzen einer Kuh.

### ZUSAMMENFASSUNG DER ERFINDUNG

Die vorliegende Erfindung betrifft einen Roboter zum Melken einer Kuh, die sich in einem Aufenthaltsbereich befindet, der eine bekannte Pose zum Roboter hat, wobei der Roboter eine Regeleinheit, eine erste Linearführung, eine zweite Linearführung und einen Gelenkarm mit einem Endeffektor aufweist, wobei: (a) die erste Linearführung dazu ausgebildet ist, den Gelenkarm parallel zu einer Horizontalachse zu führen und die zweite Linearführung dazu ausgebildet ist, den Gelenkarm parallel zu einer Vertikalachse zu führen; (b) der Endeffektor eine Melkeinheit zum Anbringen an Zitzen der Kuh aufweist; (c) der Gelenkarm einen motorisierten Mechanismus aufweist, der dazu ausgebildet ist, den Endeffektor entlang einer senkrecht zur Horizontalachse stehenden Ebene in den Aufenthaltsbereich zu positionieren; und (d) die Regeleinheit ausgebildet ist, die erste Linearführung, die zweite Linearführung und den motorisierten Mechanismus so zu regeln, dass die Melkeinheit automatisiert den Zitzen zugeführt wird.

Erfindungsgemäss ist die erste Linearführung dazu ausgebildet, einen ersten Schlitten entlang der Horizontalachse zu verfahren. Weiters ist die zweite Linearführung auf dem ersten Schlitten angeordnet, wobei die zweite Linearführung dazu ausgebildet ist einen zweiten Schlitten entlang der Vertikalachse zu verfahren. Der Gelenkarm weist dabei zudem einen Oberarm auf, der am zweiten Schlitten schwenkbar gelagert ist.

Erfindungsgemäss ist der Oberarm L-förmig ausgestaltet und weist einen Knick auf. Dieser Knick spannt insbesondere einen Winkel von zwischen 20° und 110° auf. Auch sind Ausführungsformen mit mehreren Knicken oder eine Kurvenform denkbar, solange sich insgesamt eine konkave Form ergibt, die den erfindungsgemäss kompakten Schwenkmechanismus ermöglicht. Der Gelenkarm weist zudem einen Unterarm auf, der am Oberarm schwenkbar gelagert ist, wobei der Endeffektor am Unterarm gelagert ist.

In manchen Ausführungsformen weist der motorisierte Mechanismus eine Parallelogrammführung auf, anhand derer der zweite Schlitten über den Oberarm kinematisch mit dem Unterarm gekoppelt ist, sodass eine Ausrichtung des Unterarms unabhängig von einer Schwenkposition des Oberarms konstant ist.

In manchen Ausführungsformen weist die Parallelogrammführung eine erste Gasdruckfeder auf, anhand derer der zweite Schlitten mit dem Unterarm gekoppelt ist, wobei die erste Gasdruckfeder so ausgebildet ist, dass bei einem Überschreiten einer Schwell-Druckkraft die Kopplung zwischen dem zweiten Schlitten und dem Unterarm gelöst wird.

In manchen Ausführungsformen weist der Roboter ein Zugfederelement auf, über welches der zweite Schlitten mit dem Oberarm gekoppelt ist, wobei das Zugfederelement derart vorgespannt ist, dass ein auf den Oberarm wirkendes Gegenmoment bereitgestellt wird, welches ein durch eine Gewichtskraft des Gelenkarms erzeugtes Moment zumindest teilweise kompensiert.

In manchen Ausführungsformen weist der motorisierte Mechanismus einen Motor, der am zweiten Schlitten angeordnet ist, und ein erstes Koppelgetriebe auf, über welches der Motor mit dem Oberarm gekoppelt ist. Insbesondere weist das erste Koppelgetriebe eine zweite Gasdruckfeder auf. Die zweite Gasdruckfeder kann hierbei so ausgebildet sein, dass bei einem Überschreiten einer Schwell-Druckkraft die Kopplung zwischen dem zweiten Schlitten und dem Oberarm in einer ersten Richtung gelöst wird.

In manchen Ausführungsformen weist der motorisierte Mechanismus ein zweites Koppelgetriebe auf, über welches das erste Koppelgetriebe mit dem Oberarm gekoppelt ist. Insbesondere weist das zweite Koppelgetriebe eine dritte Gasdruckfeder auf. Diese dritte Gasdruckfeder kann hierbei so ausgebildet sein, dass bei einem Überschreiten einer Schwell-Druckkraft die Kopplung zwischen dem zweiten Schlitten und dem Oberarm in einer zweiten Richtung gelöst wird.

In manchen Ausführungsformen ist die Melkeinheit verschwenkbar um eine erste Schwenkachse und um eine zweite Schwenkachse ausgebildet, wobei die erste Schwenkachse parallel zur Horizontalachse und die zweite Schwenkachse senkrecht zur Horizontalachse und zur Vertikalachse ist.

In manchen Ausführungsformen weist die Melkeinheit mindestens (a) vier Arretiervorrichtungen, (b) vier jeweils in einer der Arretiervorrichtungen arretierbare Melkbecher und (c) vier Seilzugvorrichtungen auf, die jeweils mit einem der Melkbecher verbunden sind und jeweils dazu ausgebildet sind, den jeweiligen Melkbecher im Falle eines Loslösens mit einem jeweiligen Seil wieder zurück in die jeweilige Arretiervorrichtung zu ziehen.

In manchen Ausführungsformen weist der Unterarm eine Reinigungseinheit zur Reinigung von Zitzen der Kuh auf, wobei die Reinigungseinheit verschwenkbar um eine dritte Schwenkachse ausgebildet ist, wobei die dritte Schwenkachse parallel zur Vertikalachse ist.

In manchen Ausführungsformen weist der Unterarm eine Kamera auf, die von der Regeleinheit zum Lokalisieren der Zitzen und zum Regeln des motorisierten Mechanismus verwendet wird.

### KURZE BESCHREIBUNG DER ZEICHNUNGEN

Weitere Vorteile der vorliegenden Erfindung sind aus der detaillierten Beschreibung und den Zeichnungen ersichtlich.
Figur 1 ist eine Seitenansicht einer Ausführungsform eines erfindungsgemässen Roboters in einer beispielhaften Ruheposition;
Figur 2 ist eine Hinteransicht des Roboters aus Figur 1;
Figur 3 ist eine Seitenansicht des Roboters aus den Figuren 1 und 2 in einer beispielhaften Zwischenposition, d.h. beim Zustellen des Endeffektors in den Aufenthaltsbereich hin zu den Zitzen der Kuh;
Figur 4 ist eine Hinteransicht des Roboters aus Figur 3;
Figur 5 ist eine Seitenansicht des Roboters aus den Figuren 1 bis 4 in einer beispielhaften Endposition, d.h. der Endeffektor ist am Ziel und der Roboter kann die Kuh melken;
Figur 6 ist eine Hinteransicht des Roboters aus Figur 5;
Figur 7 zeigt einen Aspekt von manchen Ausführungsformen der Erfindung hinsichtlich eines Momentenausgleichs des Gelenkarms;
Figur 8 zeigt einen Aspekt von manchen Ausführungsformen der Erfindung hinsichtlich einer Parallelogrammführung des Gelenkarms;
Figur 9 zeigt einen Aspekt von manchen Ausführungsformen der Erfindung hinsichtlich eines Überlastschutzes des Roboterarmantriebs;
Figur 10 zeigt einen Aspekt von manchen Ausführungsformen der Erfindung hinsichtlich einer ersten Verschwenkbarkeit der Melkeinheit;
Figur 11 zeigt einen Aspekt von manchen Ausführungsformen der Erfindung hinsichtlich einer zweiten Verschwenkbarkeit der Melkeinheit;
Figur 12 zeigt einen Aspekt von manchen Ausführungsformen der Erfindung hinsichtlich der Vorsehung einer Reinigungseinheit; und
Figur 13 zeigt einen Aspekt von manchen Ausführungsformen der Erfindung hinsichtlich einer Arretierbarkeit von Melkbechern der Melkeinheit.

### DETAILLIERTE BESCHREIBUNG DER ZEICHNUNGEN

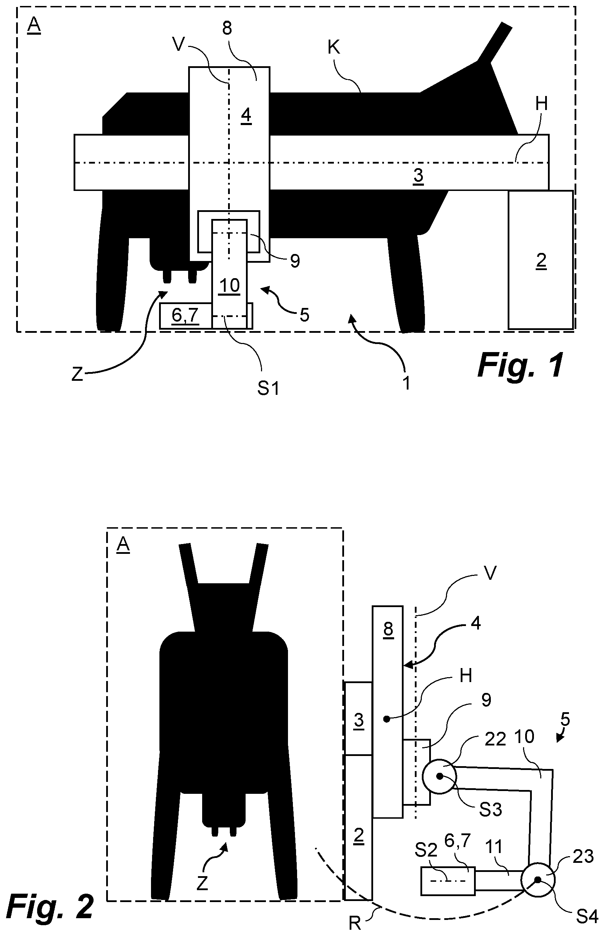

Figur 1 ist eine Seitenansicht einer Ausführungsform eines erfindungsgemässen Roboters 1 in einer beispielhaften Ruheposition. Eine Kuh K befindet sich im Aufenthaltsbereich A, um gemolken zu werden. Beispielsweise ist der Aufenthaltsbereich A deckungsgleich mit oder umfasst von einer Boxenmelkanlage, z.B. wie sie in der CH716717A2 offenbart ist. Solche Boxen dienen etwa als Schleusen zwischen verschiedenen Bereichen, welche die Kühe auf einem Hof regelmässig besuchen, etwa zwischen einem Schlagbereich und einem Futtervergabebereich. In einer solchen Box werden an den Kühen angebrachte RFID Chips gescannt, um festzustellen, wann die Kuh das letzte Mal gemolken wurde. Wird festgestellt, dass die Kuh gemolken werden muss, wird das Ausgangstor nicht geöffnet und stattdessen der Melkroboter 1 aktiviert.

Die Regeleinheit 2 ist dazu eingerichtet, den ersten Schlitten 8 horizontal entlang der Achse H und den zweiten Schlitten 9 vertikal entlang der Achse V zu verfahren. Weiters ist die Regeleinheit 2 dazu ausgebildet, diese beiden Linearführungen 3 und 4 sowie einen motorisierten Mechanismus des Gelenkarms 5 so zu regeln, dass die Melkeinheit automatisiert den Zitzen Z der Kuh K zugeführt wird. Beispielsweise können hierfür Sensoren, insbesondere Kameras, vorgesehen sein, um die Zitzen Z zu lokalisieren.

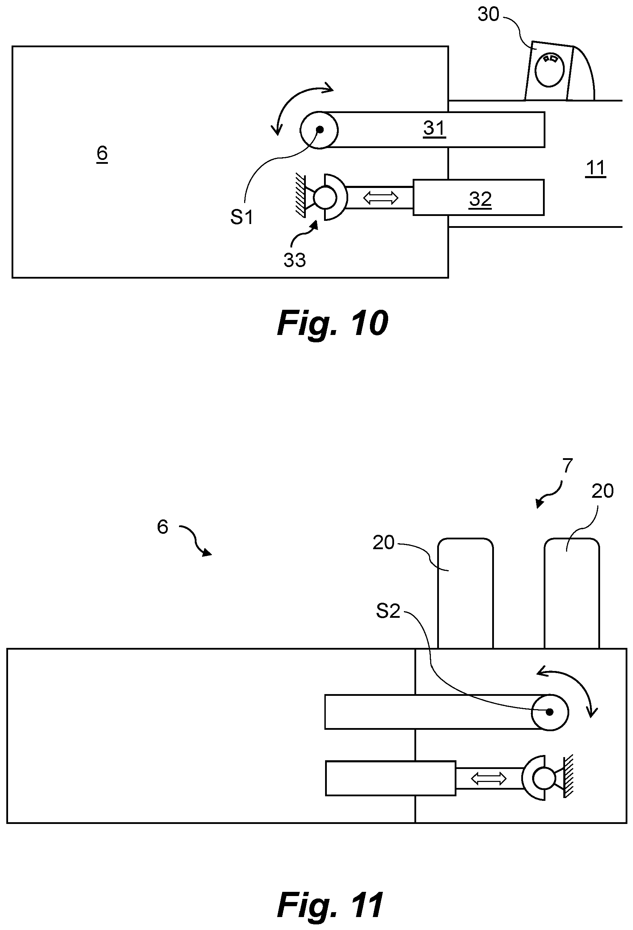

Figur 2 ist eine Hinteransicht des Roboters 1 aus Figur 1. Hier ist gezeigt, wie sich der Gelenkarm 5 zusammensetzen kann. Ein Oberarm 10 ist schwenkbar am zweiten Schlitten 9 gelagert. Hierfür kann ein Gelenk 22 mit einer dritten Schwenkachse S3 vorgesehen sein. Der Oberarm 10 ist hier in einer "L-Form" mit rechtwinkligem Knick gezeigt, wobei auch andere Formen erfindungsgemäss zulässig sind. An seinem anderen Ende ist der Oberarm 10 hier mit dem Unterarm 11 verbunden, abermals über ein Gelenk 23, dass eine Schwenkbarkeit um eine vierte Achse S4 ermöglicht. Ein Endeffektor 6 ist am Unterarm 11 gelagert. Insbesondere ist eine Verschwenkbarkeit einer Melkeinheit 7 (siehe Figuren 11-13) des Endeffektors um die erste Schwenkachse S1 und um die zweite Schwenkachse S2 ermöglicht.

Zu erkennen ist, dass der Bauraum durch die erfindungsgemässe Konstruktion sehr kompakt ist. Diese platzsparende Bauweise eignet sich daher sehr gut für Boxmelkanlagen, wobei die Roboter in den Zwischenräumen zwischen den Boxen (Aufenthaltsbereiche A) angeordnet sind. Der Gelenkarm weist einen derartigen Mechanismus auf, dass der Endeffektor 6 dadurch entlang einer Ebene, die senkrecht zur Horizontalachse ist, in den Aufenthaltsbereich positioniert werden kann. Eine Kurve R, die eine theoretische Trajektorie der Gelenkachse S4 markiert, ist hier skizzenhaft dargestellt. Da der Endeffektor geometriebedingt mit dem Boden kollidieren würde, ist die Regeleinheit 2 zu einem entsprechenden Ausweichmanöver programmiert, wie im Folgenden erklärt wird.

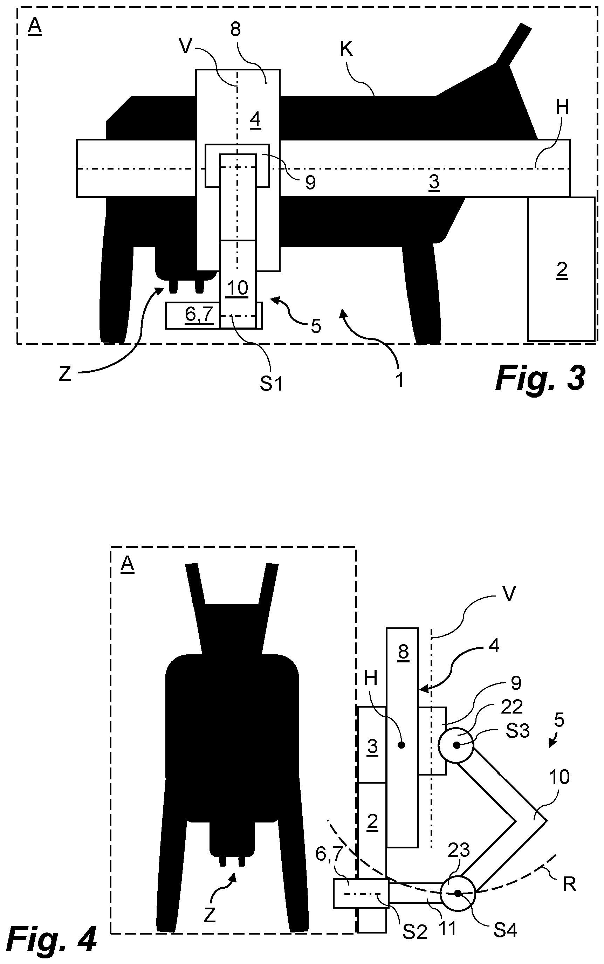

Figur 3 ist eine Seitenansicht des Roboters 1 aus den Figuren 1 und 2 in einer beispielhaften Zwischenposition, d.h. beim Zustellen des Endeffektors 6 in den Aufenthaltsbereich A hin zu den Zitzen Z der Kuh K. Erkennbar ist, dass der zweite Schlitten 9 nach oben gefahren ist, um dem Gelenkarm 5 Raum zu geben, damit er kollisionsfrei am Boden vorbeikommt. Der motorisierte Mechanismus weist in diesem Ausführungsbeispiel eine Parallelogrammführung auf, anhand derer der zweite Schlitten 9 über den Oberarm 10 kinematisch mit dem Unterarm 11 gekoppelt ist, sodass eine Ausrichtung des Unterarms unabhängig von einer Schwenkposition des Oberarms konstant ist.

Figur 4 ist eine Hinteransicht des Roboters 1 aus Figur 3. Die Schwenkkurve R der Achse S4 hat sich entsprechend der Stellung des zweiten Schlittens 9 nach oben verschoben.

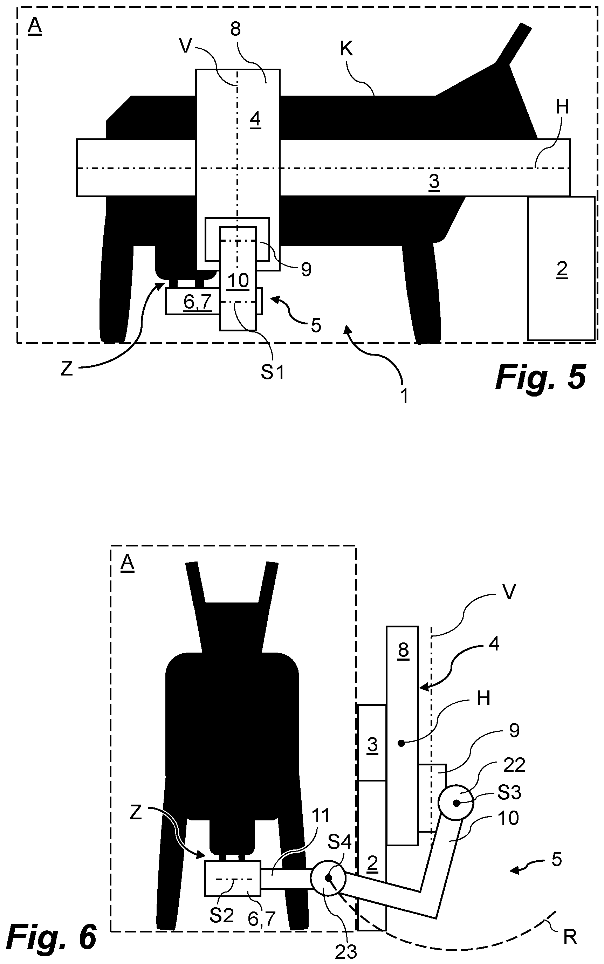

Figur 5 ist eine Seitenansicht des Roboters 1 aus den Figuren 1 bis 4 in einer beispielhaften Endposition, d.h. der Endeffektor 6 ist am Ziel und der Roboter 1 kann die Kuh K melken. Der zweite Schlitten 9 der zweiten Linearführung 4 ist nun wieder entlang der Vertikalachse V nach unten verfahren, damit der Endeffektor 6 unterhalb des Kuheuters positioniert werden kann.

Figur 6 ist eine Hinteransicht des Roboters 1 aus Figur 5. Die fiktive Schwenkkurve 6 ist wieder heruntergerutscht, sodass ein Zurückfahren des Gelenkarms 5 ohne Auffahrt des Schlittens 9 nun wieder eine Kollision mit dem Boden bedeuten würde.

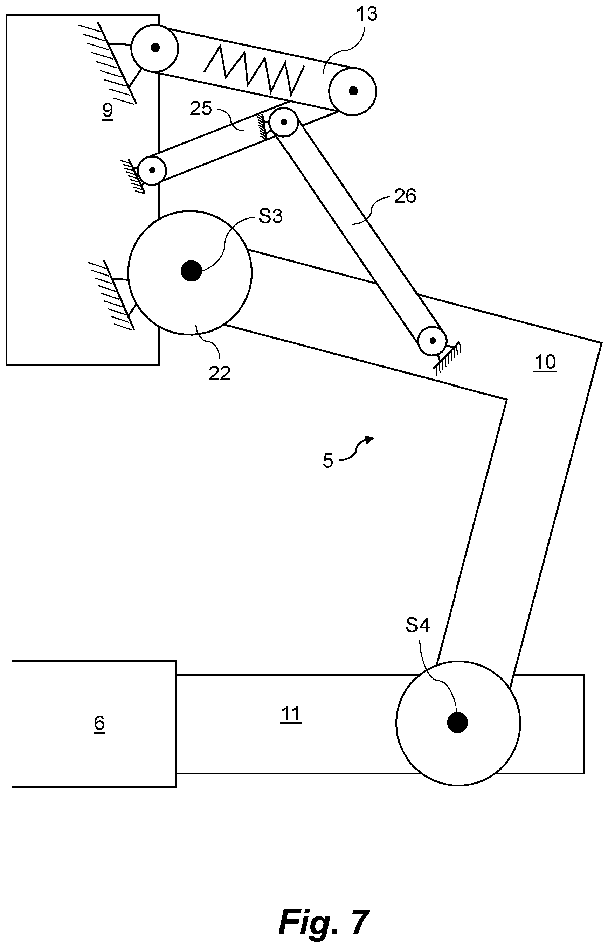

Figur 7 zeigt einen Aspekt von manchen Ausführungsformen der Erfindung hinsichtlich eines Momentenausgleichs des Gelenkarms 5. Die Armglieder 10 und 11 an sich sind bereits bedeutende Gewichtsfaktoren, wenn es um die Auslegung des Antriebs geht. Durch den am Ende befindlichen Endeffektor 6 wird die Problematik des Moments um die Achse S3 nochmals verstärkt. Damit ein Antrieb des Gelenkarms 5 hier nicht überlastet ist, bzw. eine kleinere Dimensionierung gewählt werden kann, weist der Roboter 1 ein Zugfederelement 13, anhand dessen der zweite Schlitten 9 mit dem Oberarm 10 gekoppelt ist, wobei das Zugfederelement durch eine entsprechende Vorspannung ein derartiges Gegenmoment bereitstellt, dass damit ein durch eine Gewichtskraft des Gelenkarms 5, insbesondere des Endeffektors 6, erzeugtes Moment (zumindest zum Teil) kompensiert wird. Das Gegenmoment, bzw. die Federspezifikation, ist insbesondere derart gewählt, dass dem Antrieb die Arbeit über den gesamten Schwenkbereich erleichtert wird und insbesondere dann, wenn das Moment des Gelenkarms 5 um die Schwenkachse S3 hoch ist, d.h. wie etwa in der mit Figur 2 gezeigten Ruheposition.

Das Federelement 13 und die Zwischenhebel 24 und 25 sind jeweils beidseitig schwenkbar gelagert. Die schematisch gezeigte Realisierung zur Reduzierung des restlichen Moments über die Zwischenhebel 25 und 26 (Hebellängen, Gelenkpositionen) verstärkt die Federkraft bzw. "designt" deren Wirkungsbereich und ist lediglich als Beispiel zu verstehen, da sie in Bezug auf eine spezifische Gestaltung des Roboters auszulegen ist.

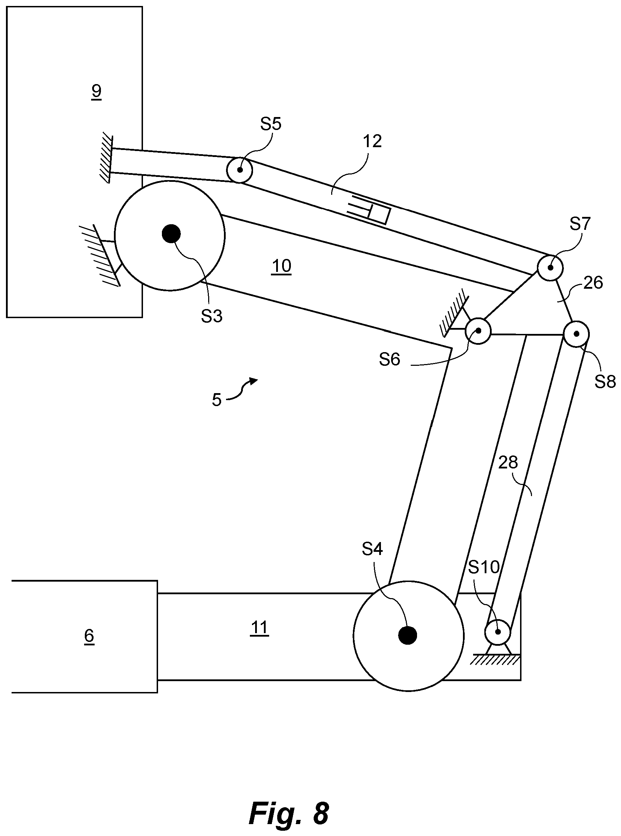

Figur 8 zeigt einen Aspekt von manchen Ausführungsformen der Erfindung hinsichtlich einer Parallelogrammführung des Gelenkarms 5. Die beispielhafte Parallelogrammführung weist ein erstes Element 12 auf, welches im Speziellen als Gasdruckfeder ausgebildet ist. Es ist um die Achse S5, die starr zum zweiten Schlitten 9 ist, drehbar gelagert und parallel zum Abschnitt des Oberarms 10, welcher von der Achse S3 bis zur Achse S6 reicht. Das andere Ende des Elements 12 ist relativ zu dem dreieckigen Element 26 drehbar um die Achse S7 gelagert. Das Element 28 ist parallel zum Abschnitt des Oberarms 10, welcher von der Achse S6 bis zur Achse S4 reicht. Das Element 28 ist relativ zum Element 26 drehbar um die Achsen S8 gelagert. An seinem anderen Ende ist das Element 28 relativ zum Unterarm 11 drehbar um die Achse S10 gelagert. Folglich wird die Ausrichtung des Unterarms 11 damit gekoppelt mit der Ausrichtung des zweiten Schlittens 9, d.h. die Ausrichtung des Unterarms 11 bleibt konstant egal welche Schwenkposition der Oberarm einnimmt.

Wenn das Element 12 als Gasdruckfeder ausgebildet ist, wie hier gezeigt, so kann damit ein Überlastschutz realisiert werden, der den Unterarm 11 bei einer zu hohen Kraft von oben ausknicken lässt. Alternativ oder zusätzlich kann natürlich das Element 28 ebenfalls als Gasdruckfeder ausgeführt sein.

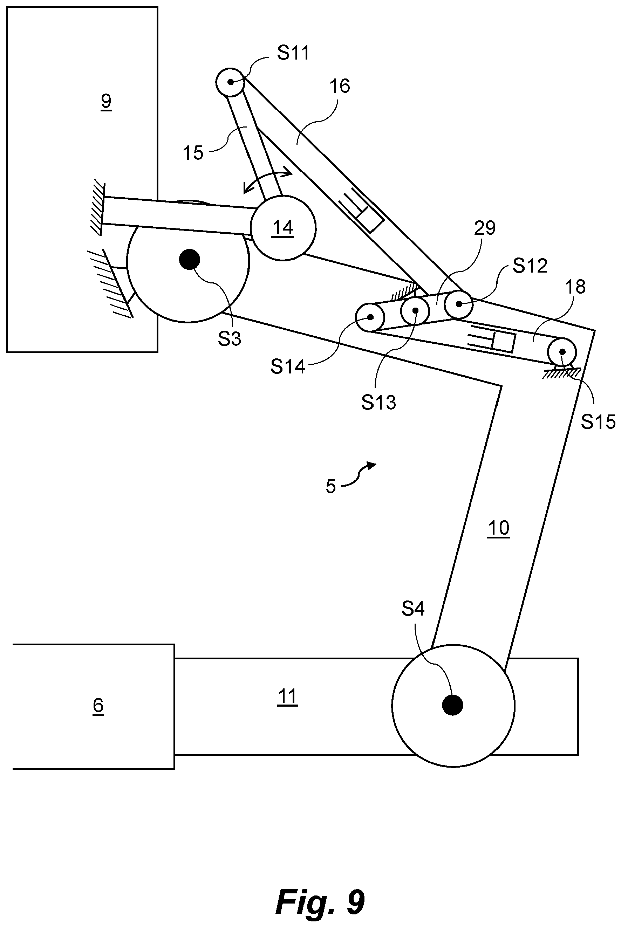

Figur 9 zeigt einen Aspekt von manchen Ausführungsformen der Erfindung hinsichtlich eines Überlastschutzes des Roboterarmantriebs 5. Damit kann die Kopplung des Motors 14 mit dem Oberarm 10 bei zu grossen Kräften beidseitig gelöst werden. Das Koppelgetriebe wird hier durch die Elemente 15, 16 und 29 gebildet. Das Element 15 wird vom Motor 14 direkt oder über ein nicht gezeigtes Getriebe angetrieben. Über die Schwenkachse S11 wird die Kraft auf das Element 16 übertragen, welches hier als Gasdruckfeder ausgeführt ist. Das Element 16 ist mit dem Element 29 über ein Gelenk verbunden, das eine Rotation um die Achse S12 zulässt. Das Element 29 ist drehbar über das Drehgelenk mit Achse S13 mit dem Oberarm 10 verbunden. Über das im Raum bewegliche Gelenk mit Schwenkachse S14 ist das Element 29 mit dem Element 18 schwenkbar verbunden. Element 18, welches hier ebenfalls beispielshaft als Gasdruckfeder ausgebildet ist, ist drehbar um die Achse S15 ebenfalls am Oberarm 10 gelagert. Im Normalfall bewegt sich die Achse S12 relativ zum Oberarm 10 nicht, allerdings kann aufgrund der Gasdruckfedern das Element 16 bei Überlast in eine erste Richtung "einknicken", und das Element 18 entsprechend in eine zweite Richtung.

Die gezeigten Aspekte der Figuren 7-9 lassen sich kombinieren aber auch separat verwirklichen. Die besagten Einsätze von Gasdruckfeder dienen hauptsächlich der Absicherung gegen Auftritt der Kuh K auf den Endeffektor 6. Diese massive Belastung würde ohne Notauflösung der Kopplungen zur Beschädigung des Roboters führen.

Figur 10 zeigt einen Aspekt von manchen Ausführungsformen der Erfindung hinsichtlich einer ersten Verschwenkbarkeit der Melkeinheit 7. Gezeigt ist hier ein schematischer Schnitt durch den Endeffektor 6, welcher die Melkeinheit umfasst bzw. mit dieser verbunden ist, und den Unterarm 11. Geschnitten ist die Ansicht in einer Ebene, die senkrecht zur Horizontalachse H ist. Eine optionale Kamera 30 ist hier auf dem Unterarm 11 angeordnet und kann zur Regelung des Roboters 1 verwendet werden. Die erste Verschwenkbarkeit wird hier beispielhaft realisiert durch eine um die Achse S1 Rotationslagerung des Endeffektors 6 am Unterarm 11, etwa über den Arm 31. Ein Linearantrieb als zweiter Arm 32 kann nun durch Vorrücken oder Zurückziehen für eine Ausschwenkung des Endeffektors sorgen. Hierfür kann zum Beispiel ein Kugel- oder Wellengelenk 33 vorgesehen sein.

Figur 11 zeigt einen Aspekt von manchen Ausführungsformen der Erfindung hinsichtlich einer zweiten Verschwenkbarkeit der Melkeinheit 7. Mit einer vergleichbaren Konstruktion wie sie in Figur 10 gezeigt ist, kann die Melkeinheit 7 um die Achse S2 verschwenkt werden, die senkrecht zur Horizontalachse H und zur Vertikalachse V steht. In anderen Worten ist die Ansicht in einer Ebene geschnitten, die parallel zur Vertikalachse V und zur Horizontalachse H ist. Zu sehen sind hier nun die Melkbecher 20, normalerweise vier an der Zahl - für jede Zitze Z ein Melkbecher.

Diese beiden vorgenannten Verschwenkbarkeiten können nötig sein um die Melkbecher 20 korrekt an den Zitzen Z zu führen, insbesondere für den Fall, dass sich die Kuh K bewegt, kann ein zügiges Nachführen notwendig werden. Eine Unterdruckerzeugung in den Melkbechern sorgt dann für ein sicheres Andocken. Dafür ist jeder einzelne Melkbecher durch einen Schlauch 36 mit einer Pumpe verbunden. Doch zunächst sei eine optionale Reinigungseinheit vorgestellt:

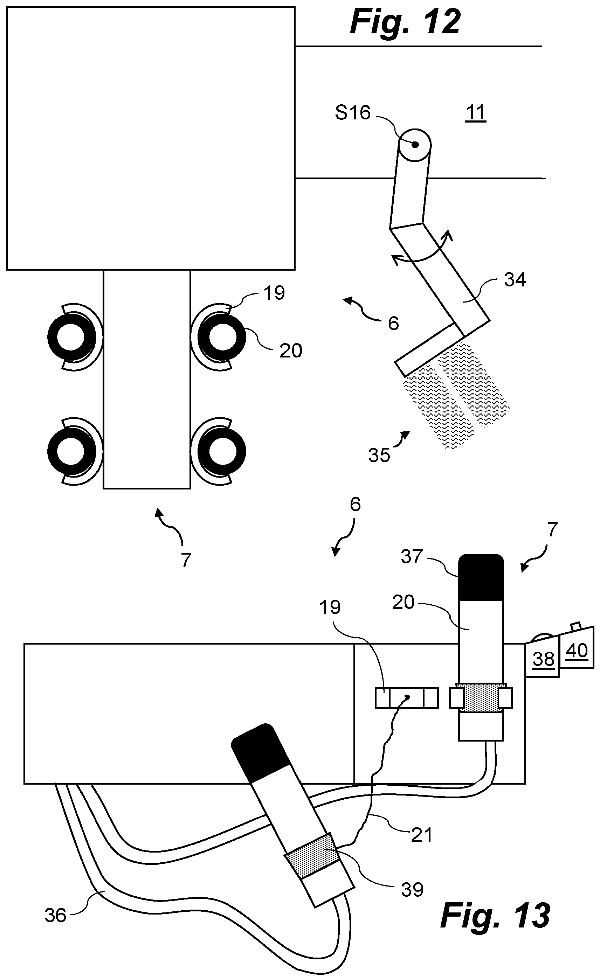

Figur 12 zeigt einen Aspekt von manchen Ausführungsformen der Erfindung hinsichtlich der Vorsehung einer Reinigungseinheit 34. Die Reinigungseinheit 34 kann zum Beispiel rotierbare Bürsten 35 zum Reinigen der Zitzen Z aufweisen und ist um die Achse S16 ausschwenkbar ausgestaltet, um die Zitzen Z zu erreichen und im Falle des Nichtgebrauchs (wie hier dargestellt) die Reinigungseinheit 34 im Hintergrund zu "verstauen". Das Reinigen der Zitzen Z kann nötig sein, wenn diese verschmutzt sind. Ein Reinigungsvorgang erfolgt automatisiert gesteuert durch die Regeleinheit 2. Eine Reinigung kann standardmässig vor jedem Melken erfolgen oder nach Bedarf, wenn etwa über die Kamera 30 oder die Kamera 38 Schmutz detektiert wurde.

Des Weiteren sind hier Arretierungsvorrichtungen 19 zu sehen, in welchen die Melkbecher 20 arretierbar sind. Dafür können z.B. konische Kontaktflächen 39 vorgesehen sein (siehe Figur 13), die hier eine Schnappverbindung mit den Arretierungsvorrichtungen 19 eingehen. Ein Zuführen der Melkbecher 20 erfolgt sequentiell von Zitze zu Zitze indem der Gelenkarm entsprechend positioniert wird. Ist also der erste Melkbecher an der ersten Zitze angebracht, wird der komplette Gelenkarm verfahren und/oder die in Figuren 10 und 11 gezeigten Verschwenkbarkeiten entsprechend angewendet, um den nächsten Melkbecher an der nächsten Zitze anzubringen. Bei besagtem Verfahrvorgang rastet der erste Melkbecher aus, aber er wird von der Zitze Z gehalten. Das Seil 21 lässt dem angedockten Melkbecher entsprechende Bewegungsfreiheit relativ zur Melkeinheit 7.

Figur 13 zeigt einen Aspekt von manchen Ausführungsformen der Erfindung hinsichtlich einer Arretierbarkeit von Melkbechern 20 der Melkeinheit 7. Wenn also der Melkbecher ausrastet und zum Beispiel nicht von der Zitze gehalten wird, weil er dort etwa keine Unterdruckverbindung bekommen konnte, oder wenn der Melkvorgang beendet ist und der Unterdruck aufgehoben wird, so wird der Melkbecher immer noch vom Seil 21 festgehalten und kann somit nicht auf den Boden fallen und dort verschmutzen. Diese Seile 21 sind im Inneren der Melkeinheit 7 bzw. des Endeffektors 6 aufrollbar verankert. Ist also ein Melkbecher 20 aus der Arretierung 19 ausgeschnappt, so kann er wieder durch das Seil 21 angezogen werden und schnappt wieder in die Arretierungsvorrichtung 19 ein.

Die abgesaugte Milch wird über die Schläuche 36 abgeführt. Jeder Melkbecher weist insbesondere einen weichen Teil 37 aus Gummi auf, wodurch der Melkbecher 20 besser an der Zitze Z ansaugen kann. Eine weitere Kamera 38 kann an der Melkeinheit 7 angeordnet sein und bietet eine direkte Sicht auf den Kuheuter, wodurch die Ansteuerung des Gelenkarms und/oder der Melkeinheit 7 vermittels der Regeleinheit 2 nochmals verbessert werden kann. Ebenfalls kann optional eine Dippdüse 40 bzw. Spritzdüse vorgesehen sein, mit welcher nach dem Melkvorgang Desinfektionsmittel auf die Zitzen aufgetragen werden kann.

Die Erfindung wurde zwar anhand ihrer bevorzugten Ausführungsform(en) erläutert, doch es können viele weitere Änderungen und Variationen vorgenommen werden, ohne über den Umfang der vorliegenden Erfindung hinauszugehen. Daher ist es vorgesehen, dass die beiliegenden Patentansprüche Änderungen und Variationen abdecken, die im tatsächlichen Umfang der Erfindung enthalten sind.

## Patentansprüche

1. Roboter (1) zum Melken einer Kuh (K), die sich in einem Aufenthaltsbereich (A) befindet, der eine bekannte Pose zum Roboter hat, wobei der Roboter eine Regeleinheit (2), eine erste Linearführung (3), eine zweite Linearführung (4) und einen Gelenkarm (5) mit einem Endeffektor (6) aufweist, wobei:
die erste Linearführung dazu ausgebildet ist, den Gelenkarm parallel zu einer Horizontalachse (H) zu führen und die zweite Linearführung dazu ausgebildet ist, den Gelenkarm parallel zu einer Vertikalachse (V) zu führen;
der Endeffektor eine Melkeinheit (7) zum Anbringen an Zitzen (Z) der Kuh aufweist;
der Gelenkarm einen motorisierten Mechanismus aufweist, der dazu ausgebildet ist, den Endeffektor entlang einer senkrecht zur Horizontalachse stehenden Ebene in den Aufenthaltsbereich zu positionieren; und
die Regeleinheit ausgebildet ist, die erste Linearführung, die zweite Linearführung und den motorisierten Mechanismus so zu regeln, dass die Melkeinheit automatisiert den Zitzen zugeführt wird, wobei
die erste Linearführung (3) dazu ausgebildet ist, einen ersten Schlitten (8) entlang der Horizontalachse (H) zu verfahren,
die zweite Linearführung (4) auf dem ersten Schlitten angeordnet ist, wobei die zweite Linearführung dazu ausgebildet ist einen zweiten Schlitten (9) entlang der Vertikalachse (V) zu verfahren, und
der Gelenkarm (5) einen Oberarm (10) aufweist, der am zweiten Schlitten schwenkbar gelagert ist, **dadurch gekennzeichnet, dass**
der Oberarm (10) L-förmig ausgestaltet ist und einen Knick aufweist,
der Gelenkarm einen Unterarm (11) aufweist, der am Oberarm schwenkbar gelagert ist, und
der Endeffektor (6) am Unterarm gelagert ist.

2. Roboter (1) nach Anspruch 1, wobei der motorisierte Mechanismus eine Parallelogrammführung aufweist, anhand derer der zweite Schlitten (9) über den Oberarm (10) kinematisch mit dem Unterarm (11) gekoppelt ist, sodass eine Ausrichtung des Unterarms unabhängig von einer Schwenkposition des Oberarms konstant ist.

3. Roboter (1) nach Anspruch 2, wobei die Parallelogrammführung eine erste Gasdruckfeder (12) aufweist, anhand derer der zweite Schlitten (9) mit dem Unterarm (11) gekoppelt ist, wobei die erste Gasdruckfeder so ausgebildet ist, dass bei einem Überschreiten einer Schwell-Druckkraft die Kopplung zwischen dem zweiten Schlitten und dem Unterarm gelöst wird.

4. Roboter (1) nach einem der Ansprüche 1 bis 3, aufweisend ein Zugfederelement (13), über welches der zweite Schlitten (9) mit dem Oberarm (10) gekoppelt ist, wobei das Zugfederelement derart vorgespannt ist, dass ein auf den Oberarm wirkendes Gegenmoment bereitgestellt wird, welches ein durch eine Gewichtskraft des Gelenkarms (5) erzeugtes Moment zumindest teilweise kompensiert.

5. Roboter (1) nach einem der vorangehenden Ansprüche, wobei der motorisierte Mechanismus einen Motor (14), der am zweiten Schlitten (9) angeordnet ist, und eine erstes Koppelgetriebe (15, 16) aufweist, über welches der Motor mit dem Oberarm (10) gekoppelt ist, insbesondere wobei das erste Koppelgetriebe eine zweite Gasdruckfeder aufweist.

6. Roboter (1) nach Anspruch 5, wobei der motorisierte Mechanismus ein zweites Koppelgelenk aufweist, über welches ein erstes Koppelgelenk mit dem Oberarm (10) gekoppelt ist, insbesondere wobei das zweite Koppelgelenk eine dritte Gasdruckfeder aufweist.

7. Roboter (1) nach einem der vorangehenden Ansprüche, wobei die Melkeinheit (7) verschwenkbar um eine erste Schwenkachse (S1) und um eine zweite Schwenkachse (S2) ausgebildet ist, wobei die erste Schwenkachse parallel zur Horizontalachse (H) und die zweite Schwenkachse senkrecht zur Horizontalachse und zur Vertikalachse (V) ist.

8. Roboter (1) nach einem der vorangehenden Ansprüche, wobei die Melkeinheit (7) mindestens
vier Arretiervorrichtungen (19),
vier jeweils in einer der Arretiervorrichtungen arretierbare Melkbecher (20) und
vier Seilzugvorrichtungen aufweist, die jeweils mit einem der Melkbecher verbunden sind und jeweils dazu ausgebildet sind, den jeweiligen Melkbecher im Falle eines Loslösens mit einem jeweiligen Seil (21) wieder zurück in die jeweilige Arretiervorrichtung zu ziehen.

## Claims

1. Robot (1) for milking a cow (K) located in a holding area (A) that is in a known pose relative to the robot, wherein the robot comprises a control unit (2), a first linear guide (3), a second linear guide (4), and an articulated arm (5) with an end effector (6), wherein:
the first linear guide is configured to guide the articulated arm parallel to a horizontal axis (H), and the second linear guide is configured to guide the articulated arm parallel to a vertical axis (V);
the end effector comprises a milking unit (7) for attachment to the cow's teats (Z);
the articulated arm comprises a motorized mechanism configured to position the end effector within the holding area along a plane perpendicular to the horizontal axis; and
the control unit is configured to control the first linear guide, the second linear guide, and the motorized mechanism such that the milking unit is automatically guided to the teats, wherein
the first linear guide (3) is configured to move a first carriage (8) along the horizontal axis (H),
the second linear guide (4) is arranged on the first carriage, wherein the second linear guide is configured to move a second carriage (9) along the vertical axis (V), and
the articulated arm (5) comprises an upper arm (10) that is pivotally mounted on the second carriage, **characterized in that** the upper arm (10) is L-shaped and includes a bend,
the articulated arm comprises a lower arm (11) that is pivotally mounted on the upper arm, and
the end effector (6) is mounted on the lower arm.

2. Robot (1) according to claim 1, wherein the motorized mechanism comprises a parallelogram guide by means of which the second carriage (9) is kinematically coupled to the lower arm (11) via the upper arm (10), such that the orientation of the lower arm remains constant regardless of the pivoting position of the upper arm.

3. Robot (1) according to claim 2, wherein the parallelogram guide comprises a first gas spring (12) by means of which the second carriage (9) is coupled to the lower arm (11), wherein the first gas spring is configured such that, upon exceeding a threshold pressure force, the coupling between the second carriage and the lower arm is released.

4. Robot (1) according to one of claims 1 to 3, comprising a tension spring element (13), via which the second carriage (9) is coupled to the upper arm (10), wherein the tension spring element is preloaded such that a counter-torque acting on the upper arm is provided, which at least partially compensates for a torque generated by the weight of the articulated arm (5).

5. Robot (1) according to one of the preceding claims, wherein the motorized mechanism comprises a motor (14) arranged on the second carriage (9) and a first coupling gear (15, 16) via which the motor is coupled to the upper arm (10), in particular wherein the first coupling gear comprises a second gas spring.

6. Robot (1) according to claim 5, wherein the motorized mechanism comprises a second coupling joint via which a first coupling joint is coupled to the upper arm (10), in particular wherein the second coupling joint comprises a third gas spring.

7. Robot (1) according to one of the preceding claims, wherein the milking unit (7) is designed to be pivotable about a first pivot axis (S1) and about a second pivot axis (S2), wherein the first pivot axis is parallel to the horizontal axis (H) and the second pivot axis is perpendicular to the horizontal axis and to the vertical axis (V).

8. Robot (1) according to one of the preceding claims, wherein the milking unit (7) comprises at least
four locking devices (19),
four milking cups (20), each of which can be secured in one of the locking devices, and
four cable-pull devices, each of which is connected to one of the milking cups and is configured in each case to pull the respective milking cup back into the respective locking device using a respective cable (21) in the event of detachment.

## Revendications

1. Robot (1) destiné à traire une vache (K) qui se trouve dans une zone de séjour (A) dont la posture par rapport au robot est connue, dans lequel le robot présente une unité de régulation (2), un premier guidage linéaire (3), un second guidage linéaire (4) et un bras articulé (5) avec un effecteur terminal (6), dans lequel :
le premier guidage linéaire est conçu pour guider le bras articulé parallèlement à un axe horizontal (H) et le second guidage linéaire est conçu pour guider le bras articulé parallèlement à un axe vertical (V) ;
l'effecteur terminal présente une unité de traite (7) destinée à être fixée aux trayons (Z) de la vache ;
le bras articulé présente un mécanisme motorisé qui est conçu pour positionner l'effecteur terminal le long d'un plan perpendiculaire à l'axe horizontal dans la zone de séjour ; et
l'unité de régulation est conçue pour réguler le premier guidage linéaire, le second guidage linéaire et le mécanisme motorisé de telle sorte que l'unité de traite soit conduite de manière automatisée jusqu'aux trayons, dans lequel
le premier guidage linéaire (3) est conçu pour déplacer un premier chariot (8) le long de l'axe horizontal (H),
le second guidage linéaire (4) est disposé sur le premier chariot, le second guidage linéaire étant conçu pour déplacer un second chariot (9) le long de l'axe vertical (V) et
le bras articulé (5) présente un bras supérieur (10) qui est monté de manière pivotante sur le second chariot, **caractérisé en ce que**
le bras supérieur (10) est configuré en forme de L et présente un coude,
le bras articulé présente un bras inférieur (11) qui est monté de manière pivotante sur le bras supérieur et
l'effecteur terminal (6) est monté sur le bras inférieur.

2. Robot (1) selon la revendication 1, dans lequel le mécanisme motorisé présente un guidage de parallélogramme à l'aide duquel le second chariot (9) est couplé de manière cinématique au bras inférieur (11) par le biais du bras supérieur (10) de telle sorte qu'une orientation du bras inférieur soit constante indépendamment d'une position de pivotement du bras supérieur.

3. Robot (1) selon la revendication 2, dans lequel le guidage de parallélogramme présente un premier ressort à gaz (12) à l'aide duquel le second chariot (9) est couplé au bras inférieur (11), le premier ressort à gaz étant conçu de telle sorte que, lorsqu'une force de pression de seuil est dépassée, le couplage entre le second chariot et le bras inférieur soit libéré.

4. Robot (1) selon l'une des revendications 1 à 3, présentant un élément de ressort de tension (13) par le biais duquel le second chariot (9) est couplé au bras supérieur (10), l'élément de ressort de tension étant précontraint de manière à fournir un contre-moment agissant sur le bras supérieur, lequel compense au moins partiellement un moment généré par une force de poids du bras articulé (5).

5. Robot (1) selon l'une des revendications précédentes, dans lequel le mécanisme motorisé présente un moteur (14) qui est disposé sur le second chariot (9) et une première transmission de couplage (15, 16) par le biais de laquelle le moteur est couplé au bras supérieur (10), en particulier dans lequel la première transmission de couplage présente un deuxième ressort à gaz.

6. Robot (1) selon la revendication 5, dans lequel le mécanisme motorisé présente une seconde articulation de couplage par le biais de laquelle une première articulation de couplage est couplée au bras supérieur (10), en particulier dans lequel la seconde articulation de couplage présente un troisième ressort à gaz.

7. Robot (1) selon l'une des revendications précédentes, dans lequel l'unité de traite (7) est conçue de manière pivotante autour d'un premier axe de pivotement (S1) et autour d'un second axe de pivotement (S2), le premier axe de pivotement étant parallèle à l'axe horizontal (H) et le second axe de pivotement étant perpendiculaire à l'axe horizontal et à l'axe vertical (V).

8. Robot (1) selon l'une des revendications précédentes, dans lequel l'unité de traite (7) présente au moins
quatre moyens de verrouillage (19),
quatre coupelles de traite (20) verrouillables respectivement dans l'un des moyens de verrouillage et
quatre moyens de traction de câble qui sont reliés respectivement à l'une des
coupelles de traite et sont respectivement conçus pour faire revenir les coupelles de traite respectives dans le moyen de verrouillage respectif dans le cas où un câble (21) respectif est détaché.
